# EUROPÄISCHE PATENTANMELDUNG

(11) **EP 4 234 309 A1**
(43) Veröffentlichungstag der Anmeldung: **30.08.2023**
(21) Anmeldenummer: 23156441.0
(22) Anmeldetag: 14.02.2023
(51) Int. Cl.: B60L 53/12, B60L 53/16, B60L 53/18, B60L 53/38

(54) **MEHRTEILIGE AUFTANKVORRICHTUNG**

(30) Priorität: 28.02.2022 CH 2032022
(71) Anmelder: Tecflower AG, 8854 Siebnen (CH)
(72) Erfinder: Reinger, Sascha, 8854 Siebnen (CH); Riegel, Galina, 8854 Siebnen (CH)
(74) Vertreter: Prins Intellectual Property AG

(57) **Zusammenfassung**

Bei einer mehrteilige Auftankvorrichtung zur Auftankung einer elektrischen Antriebsbatterie (A) oder eines Fluidtanks (B) eines bewegbaren Fahrzeugs, soll eine vereinfachte reproduzierbare Auftankung erreicht werden. Dies wird dadurch erreicht, dass die mit dem Fahrzeug fahrzeugseitig mitgeführte Kopplungsvorrichtung Verbindungsmittel (230) als mindestens eine Ladespule, in Form von Ladekontakten oder als Ladestutzen (230) ausgestaltet aufweist und einen Ablassmechanismus (24) zum Herablassen der Kontaktplatte (23) auf den Boden, einen Verfahrmechanismus (25) zum Verfahren der Kontaktplatte (23) in der Bodenebene bis zu einem Zentrum der stationären Bodenkopplungsvorrichtung und einen Absenkmechanismus (26) zum Absenken der Verbindungsmittel (230) oder Kontaktplatte (23) als Ganzes mit den Verbindungsmitteln (230) auf die Aufladespule (30), die Aufladekontakte (30) oder einem Tankstutzen (30), aufweist, wobei eine Positionierung der Kontaktplatte (23) auf der stationären Bodenvorrichtung automatisch gesteuert durch eine Rechner- und Steuereinheit (21) ermöglicht ist.

## Beschreibung

### Technisches Gebiet

Die vorliegende Erfindung beschreibt eine mehrteilige Auftankvorrichtung zur Auftankung einer elektrischen Antriebsbatterie oder eines Fluidtanks eines bewegbaren Fahrzeugs, umfassend eine fahrzeugseitige Kopplungsvorrichtung mit einer Aufladeverbindung, einer Rechner- und Steuereinheit, einer Kontaktplattenverbindung und einer bewegbaren Kontaktplatte mit Verbindungsmitteln, sowie eine am Boden stationär unbewegbar angeordnete Bodenkopplungsvorrichtung mit mindestens einer Aufladespule, mit Aufladekontakten oder einem Tankstutzen kompatibel zu den gewählten Verbindungsmitteln, sowie ein Auftankungsverfahren mit einer mehrteiligen Auftankvorrichtung zur Auftankung einer elektrischen Antriebsbatterie oder eines Fluidtanks eines bewegbaren Fahrzeugs.

### Stand der Technik

Vorrichtungen und entsprechende Verfahren zum Aufladen von Antriebsbatterien von Fahrzeugen wie Elektrofahrzeugen oder Hybridfahrzeugen mit Elektroantrieb sind in verschiedenen Varianten bekannt. Dabei steht vor allem die Einfachheit und die Anwenderfreundlichkeit im Fordergrund der Entwicklungen. Im besten Fall wird das Fahrzeug einfach an eine bestimmte Position navigiert und dort durch manuelle Betätigung einer mehrteiligen Auftankvorrichtung aufgeladen. Meist muss man von Hand noch diverse Einstellungen machen. Aus einem Stromversorgungsnetz wird dann die Antriebsbatterie mit oder ohne weiteres Dazutun des Benutzers aufgeladen.

Aus der DE102014221998 ist eine mehrteilige Aufladevorrichtung bekannt, welche sich auf das kabellose, induktive Aufladen der Antriebsbatterie konzentriert. Eine motorseitige bzw. fahrzeugseitige Kopplungsvorrichtung mit einer Ladespule wird mit einer stationären Bodenkopplungsvorrichtung gekoppelt, wobei die Ladespule mit einer Aufladespule als Teil der Bodenkopplungsvorrichtung, welche am Fussboden gelagert ist, gekoppelt wird. Die Aufladespule oder Primärspule ist üblicherweise am Boden einer Garage angebracht und mit einer Aufladeelektronik verbunden, sodass ein elektromagnetisches Ladefeld erzeugt werden kann. Sobald die Ladespule oder Sekundärspule im elektromagnetischen Ladefeld der Ladespule ist, kann eine induktive Aufladung der Antriebsbatterie erfolgen. Die Bewegung der Ladespule findet in der Bodenebene statt. Beide Spulen fungieren als Elektromagneten, welche sich anziehen und zueinander drängen, je nach induziertem Strom bzw. Magnetfeld. Eine ausreichend effiziente induktive Aufladung soll entsprechend einer optimale Ausrichtung der Sekundärspule zur Primärspule ohne grossen Rangieraufwand durch DE102014221998 erreichbar werden.

Erreicht wurde die Positionsoptimierung durch Bewegung der Primärspule als Teil der Bodenkopplungsvorrichtung, durch lineare Veschiebung, Verdrehung und/oder Verkippung. Es sollten Positionierungssignale während der Positionierung erfasst werden, um eine Einstellung der Primärspule relativ zur Sekundärspule zu erreichen. Basierend auf den Positionierungssignalen sind Stellmittel der Primärspule nötig, um die elektromagnetische Kopplung zu optimieren, damit bei immer grösser werdenden Energiemengen geringere Energieverluste und möglichst geringe elektromagnetische Emissionen nach aussen wirken.

Die Lösung von DE102014221998 benötigt neben Sensoren und Stellmitteln auch eine Steuerelektronik zur Erfassung der Sensordaten und entsprechender rückgekoppelter Positionierung der bodenseitigen Primärspule. Diese Positionierung könnte natürlich zusätzlich noch trainiert und automatisiert werden, was aber eines noch grösseren und aufwändigeren Elektronikaufwands und Software bedarf, was die Positionierung teurer und auch störanfälliger macht. Die komplexe Elektromechanik muss in den Boden eingelassen und dort bewegbar montiert werden.

### Darstellung der Erfindung

Hier soll eine vereinfachte reproduzierbare und sichere Postionierung einer fahrzeugseitigen Kopplungsvorrichtung relativ zur Bodenkopplungsvorrichtung geschaffen werden, welche durch vergleichsweise einfache Mittel gelöst wird und eine vollautomatische, wartungsfreie und weniger störanfällige Auftankung von Antriebsbatterien aber auch Fluidtanks ermöglicht.

Variationen von Merkmalskombinationen bzw. geringfügige Anpassungen der Erfindung sind in der Detailbeschreibung zu finden, in den Figuren abgebildet und in die abhängigen Patentansprüche aufgenommen worden.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.

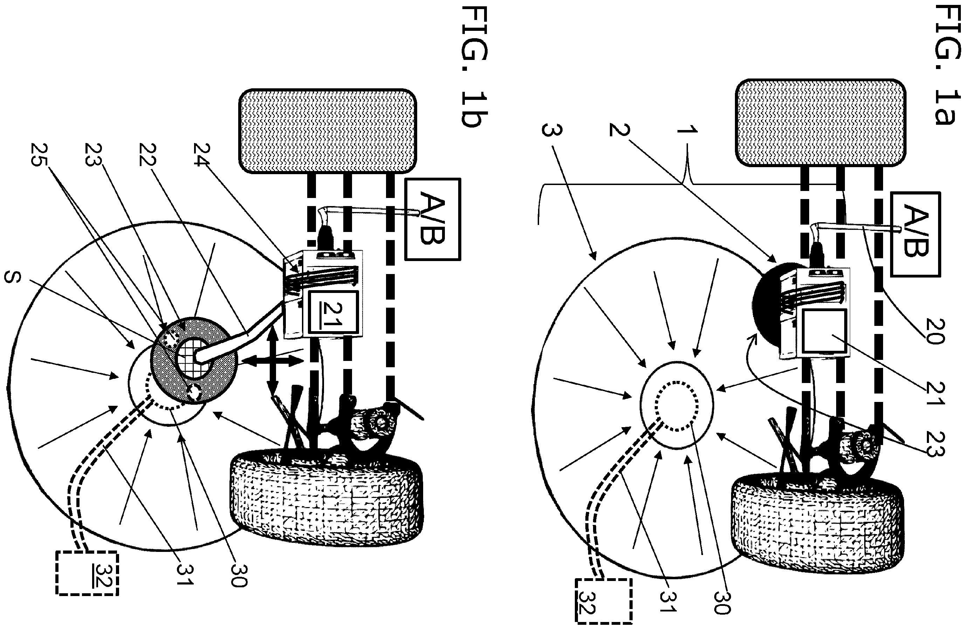

Es sind dargestellt in
- Figur 1a: zeigt eine schematische Aufsicht auf die mehrteilige Auftankvorrichtung mit einem Fahrzeug, dessen Vorderachse teilweise auf die stationäre Bodenkopplungsvorrichtung gefahren wurde, wobei die fahrzeugseitige Kopplungsvorrichtung noch im Lagerungszustand an der Fahrzeugunterseite befestigt ist.
- Figur 1b: zeigt eine schematische Ansicht der Frontpartie des Fahrzeugs aus Figur 1a, wobei eine Kontaktplatte der fahrzeugseitigen Kopplungsvorrichtung 2 auf einen Boden abgesenkt und in Richtung des Zentrums der Bodenkopplungsvorrichtung verfahren ist.

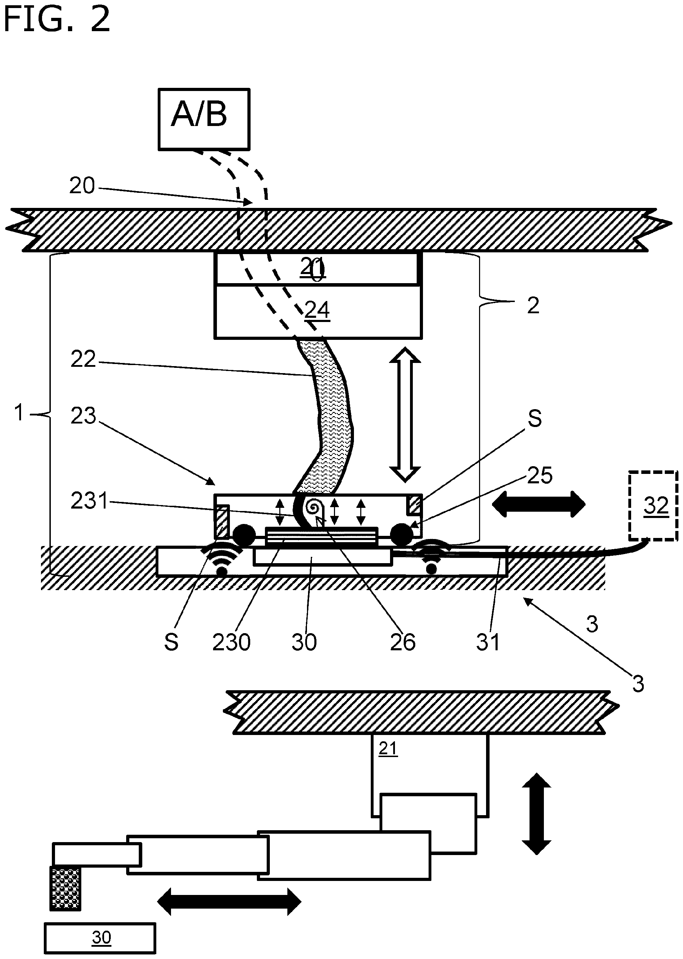

- Figur 2: zeigt eine schematische Schnittansicht der mehrteiligen Auftankvorrichtung, wobei die Kontaktplatte auf den Boden abgelassen, mit einem Verfahrmechanismus verfahren und Verbindungsmittel der Kontaktplatte mittels eines Absenkmechanismus auf die stationäre Bodenkopplungsvorrichtung in eine Auftankposition gebracht wurde.

### Beschreibung

Hier wird eine mehrteilige Auftankvorrichtung 1 beschrieben, welche eine fahrzeugseitige Kopplungsvorrichtung 2 und eine stationäre Bodenkopplungsvorrichtung 3 umfasst beschrieben. Die fahrzeugseitige Kopplungsvorrichtung 2 ist an einer Unterseite eines Fahrzeugs befestigt und mit diesem Fahrzeug mitführbar. Hier sind nur zwei Räder, die Radaufhängung, eine Antriebsbatterie A und ein Fluidtank B gezeigt. Mit der mehrteiligen Auftankvorrichtung 1 soll eine automatische Betankung der Antriebsbatterie A mit elektrischem Strom oder des Fluidtanks B mit einem Fluid, beispielsweise eines Verbrennungsgases erfolgen.

Die fahrzeugseitige Kopplungsvorrichtung 2 ist über eine Aufladeverbindung 20, als mindestens ein Elektrokabel mit der Antriebsbatterie A oder als Schlauch mit dem Fluidtank B, verbunden und weist eine Rechner- und Steuereinheit 21 und eine vom Fahrzeug in Richtung Boden absenkbare Kontaktplatte 23 auf. Eine Kontaktplattenverbindung 22 ist in Figur 1b erkennbar und kann entsprechend von mindestens einem Elektrokabel oder einem Fluidschlauch gebildet sein.

Mittels eines Ablassmechanismus 24, gesteuert von der Rechner- und Steuereinheit 21 kann die Kontaktplatte 23 zur Auftankung in Richtung Boden vom Fahrzeug abgelassen werden, bis zum Bodenkontakt. Durch einen Verfahrmechanismus 25 an der Kontaktplatte 23 wird die Kontaktplatte 23 in das Zentrum der stationären Bodenkopplungsvorrichtung 3 verfahren, in Richtung der Pfeile, so nahe es die Kontaktplattenverbindung 22 zulässt. Dabei ist im Zentrum die Übertragung des elektrischen Stromes oder die Stutzenverbindung der Fluidschläuche optimal.

Nach dem Ablassen der Kontaktplatte 23 und dem Verfahren in der Ebene mittels Verfahrmechanismus 25, wird die Kontaktplatte 23 als Ganzes oder Verbindungsmittel 230 in der Kontaktplatte 23 mittels eines Absenkmechanismus 26 auf den Boden bündig abgesenkt.

Im Zentrum der Bodenkopplungsvorrichtung 3 ist eine Aufladespule 30, ein Aufladekontakt 30 oder ein Tankstutzen 30 angeordnet, mittels einer Zuleitung 31 mit Strom bzw. einem Fluid beaufschlagt und mittels einer Aufladeelektronik 32 der stationären Bodenkopplungsvorrichtung 3 gesteuert betreibbar.

In Figur 1b ist der Ablassmechanismus 24 als Trommel mit auf- und abrollbarem Elektrokabel bzw. Fluidschlauch 22 ausgeführt dargestellt, wobei am freien Ende der Kontaktplattenverbindung 22 die Kontaktplatte 23 angeordnet ist, die motorgesteuert von der Trommel Richtung Boden abgelassen werden kann, nachdem das Fahrzeug in der Nähe der Bodenkopplungsvorrichtung 3 abgestellt wurde. Als Alternative für die Trommel als Ablassmechanismus 24 kann auch ein Arm, an welchem die Kontaktplatte 23 befestigt ist, eingesetzt werden. Trommel und Arm werden elektrisch, elektromechanisch oder pneumatisch, gesteuert durch die Rechner- und Steuereinheit 21 angetrieben.

Als Verfahrmechanismus 25 an der Kontakplatte 23 auf dem Boden nach Absenkung, ist hier eine Rollenkonstruktion mit mindestens zwei Bewegungsrollen 25 und einem Rollmotor 25 vorgesehen. Der Verfahrmechanismus 25 wird durch die Rechner- und Steuereinheit 21 gesteuert. Durch Bewegungsrollen 25 und Rollmotor 25 bleibt die Kontaktplatte 23 parallel zum Boden bewegbar und wird zu einem optimalen Auftankbereich steuerbar verfahren. Der Verfahrmechanismus 25 zur Bewegung der Kontaktplatte 23 parallel zum Boden, kann aber auch als Luftkissenmechanik mit Luftkompressor ausgestaltet sein, welche eine rutschende Bewegung der vom Boden beabstandeten Kontaktplatte 23 ermöglicht.

Damit die Steuerung automatisiert erfolgen kann, ist mindestens ein Sensor S an der Kontaktplatte 23 angeordnet, welcher hier im Zentrum der Kontaktplatte 23 angeordnet ist. Als Sensor S kommen verschiedene Ausführungsformen in Frage, bespielsweise auf elektromagnetischer oder magnetischer Basis, sowie optische Sensoren im sichtbaren Bereich oder im Infrarotbereich oder ein rein mechanischer Kontaktsensor. Dabei kann an der Bodenkopplungsvorrichtung 3 ein entsprechendes Gegenstück des gewählten Sensors S zur Unterstützung angebracht werden. Die Bewegungsmöglichkeiten der Kontaktplatte 23 in einer Ebene parallel zum Boden durch den Verfahrmechanismus 25 sind mit dem schwarzen Doppelpfeil in Figur 1b angedeutet.

In Figur 2 ist ein Fahrzeugunterboden teilweise dargestellt, an welchem die fahrzeugseitige Kopplungsvorrichtung 2 angeordnet ist, wobei die Rechner- und Steuereinheit 21 das Herablassen der Kontaktplatte 23 mittels des Ablassmechanismus 24, wie mit dem senkrechten Doppelpfeil gekennzeichnet, ermöglicht.

Bei durch den Ablassmechnanismus 24 auf den Boden herabgelassener Kontaktplatte 23, kann der Verfahrmechanismus 25, hier mit Bewegungsrolle 25 und Rollmotor 25 dargestellt, anhand der Sensoren S zum Ort mit optimaler Strom- bzw. Fluidübertragung bewegt werden, was mit dem schwarzen waagerechten Doppelpfeil angedeutet ist. Damit ist die Bewegung der Kontaktplatte 23 in einer Ebene parallel zur Bodenfläche und zur stationären Bodenkopplungsvorrichtung 3 ermöglicht.

Am Ort des Zentrums der stationären Bodenkopplungsvorrichtung 3 können hier elektromagnetische Wechselfelder, elektrischer Strom oder das Fluid optimal von der Aufladespule 30, den Aufladekontakten 30 oder dem Tankstutzen 30 optimal in die Kontaktplatte 23 bzw. in die Verbindungsmittel 230 in Form mindestens einer Ladespule 230, zweier Ladekontakte 230 oder mindestens eines Ladestutzens 230 übergehen, während der Auftankprozess gestartet ist. Vom Verbindungsmittel 230 führt ein Elektrokabel 231 oder ein Ladeschlauch 231 zur Kontaktplattenverbindung 22 und damit indirekt über die Aufladeverbindung 20 zur Antriebsbatterie A oder zum Fluidtank B.

Damit eine vollautomatische Auftankung möglich ist, muss die optimale Position der Kontaktplatte 23 mit mindestens einem Sensor S über der Aufladespule 30, den Aufladekontakten 30 oder dem Tankstutzen 30 gefunden werden und mit dem Verfahrmechanismus 25 dorthin verfahren werden.

Um den Kontakt zu optimieren, wird entweder die Kontaktplatte 23 als Ganzes oder die Ladespule, die Ladekontakte oder der Ladestutzen 230 in der Kontaktplatte 23 mittels des Absenkmechanismus 26 abgesenkt.

In Figur 2 ist der Absenkmechanismus 26 als Elektromotor ausgestaltet, durch welchen das Verbindungsmittel 230 in Richtung Boden abgesenkt werden kann. Die Bewegungsrichtung des Absenkmechanismus 26 ist mittels der senkrechten Doppelpfeile angedeutet. Auch der Absenkmechanismus 26 ist durch die Rechner- und Steuereinheit 21 gesteuert. Möglich ist auch das Verbindungsmittel 230 an einem Schwenkarm bewegbar zu befestigen, wodurch das Verbindungsmittel 230 gesteuert in Richtung Bodenkopplungsvorrichtung 3 abgesenkt werden kann. Oder der Absenkmechanismus 26 bewegt die Aufhängung der Bewegungsrolle und des Rollmotors 25 in eine Richtung des Innenraums der Kontaktplatte 23, wobei das Verbindungsmittel 230 ebenfalls abgesenkt wird.

Entscheidend ist, dass in der stationären Bodenkopplungsvorrichtung 3 keine bewegbaren Bauteile verwendet werden und die Zuleitung 31 und die Aufladespule, die Aufladekontakte oder der Tankstutzen 30 ortsfest stabil befestigt sind. Sogar ohne eine Aufladeelektronik 32 kann die Auftankung funktionieren, wenn die Zuleitung 31 immer mit elektrischem Strom oder Fluid beaufschlagt ist.

Sobald die Verbindungsmittel 230 mit der Aufladespule 30, den Aufladekontakten 30 oder dem Tankstutzen 30 verbunden ist, kann die Auftankung beginnen.

Es ist eine elektrische Aufladung der Antriebsbatterie A durch eine leitergebundene Aufladung durch Kontakt zweier Ladekontakte 230 und Aufladekontakten 30 oder eine drahtlose Aufladung durch Kontakt einer Ladespule 230 und einer Aufladespule 30 erreichbar.

Soll der Fluidtank B im Fahrzeug aufgetankt werden, muss ein schliessender Kontakt zwischen Ladestutzen 230 an der Kontaktplatte 23 und einem Tankstutzen 30 an der stationären Bodenkopplungsvorrichtung 3 erreicht werden.

Die Kontaktplatte 23 ist bevorzugt mehrlagig als Gehäuse ausgestaltet und weist einen Innenraum auf, in welchem die Verbindungsmittel 230, Sensoren S, aber auch die Bauteile des Verfahrmechanismus 25 und/oder die Bauteile des Absenkmechanismus 24 angeordnet sein können.

### Auftankungsverfahren:

Zur Durchführung des Auftankungsverfahrens muss in einem ersten Schritt das Fahrzeug von einem Fahrzeuglenker im Bereich der stationären Bodenkopplungsvorrichtung 3 abgestellt werden. Hier ist die fahrzeugseitige Kopplungsvorrichtung 2 im Bereich der Frontachse des Fahrzeuges angeordnet und die stationäre Bodenkopplungsvorrichtung 3 kommt in etwa zwischen den Vorderrädern zu liegen. Da die Bodenkopplungsvorrichtung 3 unbewegbar ist, muss das Fahrzeug entsprechend positioniert werden.

Ist das Fahrzeug platziert kann die Rechner- und Steuereinheit 21 gestartet und das gewünschte Auftankungsverfahren gestartet. Entsprechend sollte eine Bedienmöglichkeit der Rechner- und Steuereinheit 21 am Armaturenbrett des Fahrzeugs eingerichtet sein. Gesteuert von der Rechner- und Steuereinheit 21 wird die Kontaktplatte 23 mit dem Ablassmechanismus 24 vom Fahrzeug bis zum Kontakt mit dem Boden abgelassen.

Mittels Verfahrmechanismus 25 setzt sich dann die Kontaktplatte 23 in Bewegung in Richtung des optimalen Auftankpunktes der stationären Bodenkopplungsvorrichtung 3. Gesteuert mittels des mindestens einen Sensors S findet der Verfahrmechanismus 25 die beste Position der Kontaktplatte 23, damit die Verbindungsmittel 230 in einen minimalen Abstand zur Aufladespule 30, den Aufladekontakten 30 oder dem Tankstutzen 30 gebracht ist.

Als nächstes wird der Absenkmechanismus 26 gesteuert von der Rechner- und Steuereinheit 21 automatisch betätigt, wodurch die Verbindungsmittel 230 bzw. die Kontaktplatte 23 samt Verbindungsmittel 230 mit der Aufladespule 30, den Aufladekontakten 30 oder dem Tankstutzen 30 gekoppelt werden.

Wenn die Zuleitung 31 ständig mit elektrischem Strom oder mit Fluid beaufschlagt ist, kann der Auftankungsvorgang direkt beginnen. Die Rechner- und Steuereinheit 21 kann auch zur Überwachung der Auftankung eingesetzt werden.

Wenn die stationäre Bodenkopplungsvorrichtung 3 die Aufladeelektronik 32 umfasst, dann kann der Auftankungsvorgang entsprechend durch die Aufladeelektronik 32 gestartet und nach Vollendung wieder beendet werden. In diesem Fall sorgt die Aufladeelektronik 32 für die automatische Auftankung und Beendung des Prozesses.

Nach erfolgter Auftankung, werden die Verbindungsmittel 230 wieder von der stationären Bodenkopplungsvorrichtung 3 gelöst, also mittels Absenkmechanismus 26 entfernt, mittels Verfahrmechanismus 25 die Kontaktplatte 23 in der Ebene wegbewegt und mittels Ablassmechanismus 24 wieder am Fahrzeugboden befestigt.

Bei Verwendung der Aufladeelektronik 32 kann dafür gesorgt werden, dass die Stromversorgung und Fluidbeaufschlagung nur bei gestartetem Auftankprozess stattfindet, was aus Sicherheitsgründen und Umweltschutzgründen bevorzugt ist.

### Bezugszeichenliste

A Antriebsbatterie (Elektrofahrzeug/Hybridfahrzeug)
B Fluidtank
1 Mehrteilige Auftankvorrichtung
   2 fahrzeugseitige Kopplungsvorrichtung
      20 Aufladeverbindung
         a) elektrisch (von Kontaktplatte zur Antriebsbatterie, Kabel oder drahtlos)
         b) Flüssigkeitsverbindung (Schlauch zur Kontaktplatte) 21 Rechner- und Steuereinheit (zur Positionierung und als Laderegler)
      22 Kontaktplattenverbindung (Fluidschlauch oder Elektrokabel)
      23 Kontaktplatte
         230 Verbindungsmittel=Ladespule/ Ladekontakt /Ladestutzen
         231 Elektrokabel/Ladeschlauch
         S Sensor (elektromagnetisch/magnetisch/optisch (sichtbar/infrarot), Kontaktsensorik)
      24 Ablassmechanismus
         Trommel (mit Elektrokabel/Fluidschlauch) Arm
      25 Verfahrmechanismus an Kontaktplatte (in Ebene) Bewegungsrollen
         Rollmotor
      26 Absenkmechanimus
         Elektromotor oder Absenkarm für Verbindungsmittel Linearmotor für Rollen
   3 stationäre Bodenkopplungsvorrichtung
      30 Aufladespule/Aufladekontakte/Tankstutzen
      31 Zuleitung (elektrischer Strom/Fluid)
      32 Aufladeelektronik

## Patentansprüche

1. Mehrteilige Auftankvorrichtung (1) zur Auftankung einer elektrischen Antriebsbatterie (A) oder eines Fluidtanks (B) eines bewegbaren Fahrzeugs, umfassend eine
fahrzeugseitige Kopplungsvorrichtung (2) mit einer Aufladeverbindung (20), einer Rechner- und Steuereinheit (21), einer Kontaktplattenverbindung (22) und einer bewegbaren Kontaktplatte (23) mit Verbindungsmitteln (230), sowie eine am Boden stationär unbewegbar angeordnete Bodenkopplungsvorrichtung (3) mit mindestens einer Aufladespule (30), mit Aufladekontakten (30) oder einem Tankstutzen (30) kompatibel zu den gewählten Verbindungsmitteln (230),
**dadurch gekennzeichnet, dass**
die mit dem Fahrzeug fahrzeugseitig mitgeführte Kopplungsvorrichtung (2)
Verbindungsmittel (230) als mindestens eine Ladespule, in Form von Ladekontakten oder als Ladestutzen (230) ausgestaltet aufweist und
einen Ablassmechanismus (24) zum Herablassen der Kontaktplatte (23) auf den Boden,
einen Verfahrmechanismus (25) zum Verfahren der Kontaktplatte (23) in der Bodenebene bis zu einem Zentrum der stationären Bodenkopplungsvorrichtung (3) und
einen Absenkmechanismus (26) zum Absenken der Verbindungsmittel (230) oder Kontaktplatte (23) als Ganzes mit den Verbindungsmitteln (230) auf die Aufladespule (30), die Aufladekontakte (30) oder einem Tankstutzen (30), aufweist, wobei eine Positionierung der Kontaktplatte (23) auf der stationären Bodenvorrichtung (3), ein Auftankprozess der elektrischen Antriebsbatterie (A) oder des Fluidtanks (B) und ein Verstauen der Kontakrplatte (23) an der Fahrzeugunterseite nach Beendigung des Auftankprozesses automatisch gesteuert durch die Rechner- und Steuereinheit (21) ermöglicht ist.

2. Mehrteilige Aufladevorrichtung (1) nach Anspruch 1, wobei der von der Rechner- und Steuereinheit (21) gesteuerte Ablassmechanismus (24) als motorgesteuerte Trommel mit einer auf- und abrollbaren Kontaktplattenverbindung (22) als Elektrokabel oder Fluidschlauch (22) ausgeführt ist.

3. Mehrteilige Aufladevorrichtung (1) nach Anspruch 1, wobei der von der Rechner- und Steuereinheit (21) gesteuerte Ablassmechanismus (24) als elektrisch, elektromechanisch oder pneumatisch gesteuerter Arm ausgebildet ist, an welchem die Kontaktplatte (23) in Richtung Boden und zurück bewegbar angeordnet ist.

4. Mehrteilige Aufladevorrichtung (1) nach einem der vorhergehenden Ansprüche, wobei der Verfahrmechanismus (25) mit der Rechner- und Steuereinheit (21) verbunden in Form von mindestens einer Bewegungsrolle und mindestens eines Rollmotors (25) gebildet ist und eine elektrisch oder elektromechanisch gesteuerte Bewegung parallel zum Boden erlaubt.

5. Mehrteilige Aufladevorrichtung (1) nach einem der Ansprüche 1 bis 3, wobei der Verfahrmechanismus (25) mit der Rechner- und Steuereinheit (21) verbunden in Form einer Luftkissenmechanik mit Luftkompressor ausgestaltet ist, die eine rutschende Bewegung der vom Boden beabstandeten Kontaktplatte (23) ermöglicht.

6. Mehrteilige Aufladevorrichtung (1) nach einem der vorhergehenden Ansprüche, wobei der Absenkmechanismus (26) mit der Rechner- und Steuereinheit (21) verbunden ist und in Form eines Arms ausgebildet ist, welcher den Abstand der Kontaktplatte (23) zum Boden variiert.

7. Mehrteilige Aufladevorrichtung (1) nach Anspruch 4, wobei der Absenkmechanismus (26) mit der Rechner- und Steuereinheit (21) verbunden ist und als Arm ausgebildet ist, welcher eine Aufhängung der mindestens einen Bewegungsrolle und des Rollmotors (25) in Richtung eines Innenraums der Kontaktplatte (23) und zurück bewegen kann.

8. Mehrteilige Aufladevorrichtung (1) nach einem der Ansprüche 1 bis 5, wobei der Absenkmechanismus (26) mit der Rechner- und Steuereinheit (21) verbunden ist und von einem Schwenkarm gebildet ist, an welchem das Verbindungsmittel (230) gesteuert in Richtung Bodenkopplungsvorrichtung (3) bewegbar befestigt ist.

9. Mehrteilige Aufladevorrichtung (1) nach einem der vorhergehenden Ansprüche, wobei an der Kontaktplatte (23) oder im Innenraum der Kontaktplatte (23) mindestens ein Sensor (S) angeordnet und mit der Rechner- und Steuereinheit (21) zur Bestimmung der optimalen Position relativ zur Bodenkopplungsvorrichtung (3) verbunden ist, wobei der mindestens eine Sensor (S) ein Berührungssensor, ein elektromagnetischer Sensor, ein Magnetsensor, ein optischer Sensor oder Infrarotsensor ist.

10. Mehrteilige Aufladevorrichtung (1) nach einem der vorhergehenden Ansprüche, wobei die stationäre Bodenkopplungsvorrichtung (3) eine Aufladeelektronik (32) umfasst, welche den Auftankprozess startet und beendet, wobei entsprechend elektrischer Strom oder ein Fluid gesteuert zugeführt wird.

11. Auftankungsverfahren mit einer mehrteiligen Auftankvorrichtung (1) zur Auftankung einer elektrischen Antriebsbatterie (A) oder eines Fluidtanks (B) eines bewegbaren Fahrzeugs, **gekennzeichnet durch** die Schritte:
- Positionierung des Fahrzeugs in die Nähe einer örtlich fixierten unbewegbaren Bodenkopplungsvorrichtung (3)
- Bedienung einer Rechner- und Steuereinheit (21) zum Start des Auftankverfahrens,
- Absenken einer Kontaktplatte (23) in Richtung Bodenkopplungsvorrichtung (3) am Boden unter dem Fahrzeug mittels eines Ablassmechanismus (24), anschliessendes
- Verfahren der Kontaktplatte (23) mittels eines Verfahrmechanismus (25) parallel zur Bodenkopplungsvorrichtung (3) derart, dass Verbindungsmittel (230) der Kontaktplatte (23) in einen minimalen Abstand zu einer Aufladespule (30), Aufladekontakten (30) oder einem Tankstutzen (30) gebracht sind und anschliessendes
- Absenken der Verbindungsmittel (230) bzw. der Kontaktplatte (23) samt Verbindungsmittel (230) mittels eines Absenkmechanismus (26) automatisch gesteuert von der Rechner- und Steuereinheit (21) und
- Starten des Auftankvorganges durch Beaufschlagung der Aufladespule (30) oder der Aufladekontakte (30) mit elektrischem Strom oder des Tankstutzens (30) mit Fluid, wobei nach dem Auftanken, eine
- Zurückführung der Kontaktplatte (23) in einen Lagerzustand mittels Absenkmechanismus (26), Verfahrmechanismus (25) und Ablassmechanismus (24) erfolgt.

12. Auftankungsverfahren mit einer mehrteiligen Auftankvorrichtung (1) nach Anspruch 11, mit einer Auftankvorrichtung (1) nach einem der Ansprüche 1 is 10.
